# EUROPEAN PATENT APPLICATION

(11) **EP 4 528 187 A1**
(43) Date of publication of application: **26.03.2025**
(21) Application number: 23807018.9
(22) Date of filing: 18.05.2023
(51) Int. Cl.: F25D 23/02, E05D 3/02, E05D 5/06

(54) **REFRIGERATOR**

(30) Priority: 20.05.2022 CN 202210556226
(71) Applicant: Qingdao Haier Refrigerator Co., Ltd., Laoshan District Qingdao Shandong 266101 (CN); Haier Smart Home Co., Ltd., Qingdao, Shandong 266101 (CN)
(72) Inventor: LU, Yong, Qingdao, Shandong 266101 (CN); ZUO, Lihua, Qingdao, Shandong 266101 (CN); ZHANG, Fangyou, Qingdao, Shandong 266101 (CN); WANG, Hao, Qingdao, Shandong 266101 (CN)
(74) Representative: Winter, Brandl - Partnerschaft mbB
(86) International application number: PCT/CN2023/094950
(87) International publication number: WO 2023/222067

(57) **Abstract**

The present application provides a refrigerator, comprising a cabinet, a door, and lines extending from the cabinet into the door, wherein the door has a receiving groove. The rear wall of the door has an opening communicating with the receiving groove. The refrigerator further comprises a lead box fixed to the cabinet. The outlet end of the lead box protrudes into the receiving groove through the opening, and at least a portion of the lines extends through the lead box into the door.

## Description

### TECHNICAL FIELD

The present application relates to the field of refrigeration equipment, particularly to a refrigerator.

### BACKGROUND

With the intelligent and multi-functional development of refrigerators, various functional modules are typically installed on refrigerator doors, such as ice water modules , touch control modules , etc. These functional modules usually require connections with other modules in the cabinet through lines to provide power, water, and cooling for the functional modules on the door.

Existing lines connecting between the door and the cabinet are generally routed via the hinge pin on the door, i.e., the hinge pin has a through-hole penetrating along the up-down direction, and the lines from the cabinet pass through this through-hole and extend into the door to connect with various functional modules on the door. However, limited by the size of the hinge pin and the strength requirements of the hinge pin, the through-hole cannot be made very large. When there are many lines, the crowded space increases wear between the lines, thereby reducing the service life of the lines, moreover, these lines often include both water line s and strong/weak electric wires. When the water lines or the strong/weak electric wires become worn or broken due to crowding, it can lead to water leakage or electrical leakage, posing certain safety risks.

Chinese Patent No. CN110130758B discloses a hinge assembly for refrigerators, which provides an additional second hinge structure for other lines to pass through, addressing the technical problem of difficulty in simultaneously routing multiple lines through a single hinge structure into the door. However, on one hand, the second hinge structure is a movable wire box structure. During the opening and closing of the door, the movable wire box itself has a large swinging amplitude, which can cause friction between the lines, affecting their service life, additionally, when both strong electric wires and weak electric wires are routed through the movable wire box, compression and deformation can lead to severe wear of the lines and generate noise.

### SUMMARY

The object of the present application is to provide a refrigerator.

To achieve the above object, the present application adopts the following technical solution: A refrigerator , comprising a cabinet, a door rotatably connected to the front side of the cabinet, lines extending from the cabinet into the door, wherein the door has a receiving groove for accommodating the lines; the rear wall of the door has an opening communicating with the receiving groove, the refrigerator further comprises a lead box fixed to the cabinet, the outlet end of the lead box protrudes into the receiving groove through the opening, and at least a portion of the lines extends through the lead box into the door.

As a further improved technical solution of the present application, the refrigerator further comprises a shielding plate movably arranged in the receiving groove, the shielding plate is located between the lines and the opening to keep the lines always within the receiving groove.

As a further improved technical solution of the present application, the shielding plate is rotatably connected to the outlet end of the lead box, and the lines extending from the outlet end extend towards the interior of the door on the front side of the shielding plate.

As a further improved technical solution of the present application, the receiving groove also has a guide groove, and the end of the shielding plate away from the lead box has a guide pin slidably connected within the guide groove.

As a further improved technical solution of the present application, the end of the guide groove near the rear wall of the door is close to the edge of the opening.

As a further improved technical solution of the present application, when the guide pin is at the end of the guide groove near the rear wall of the door, the shielding plate covers the gap between the lead box and the opening.

As a further improved technical solution of the present application, the end of the shielding plate away from the lead box has an anti-detachment portion, when the guide pin is at the end of the guide groove near the rear wall of the door, the anti-detachment portion is located on the side of the rear wall near the opening facing towards the front wall of the door.

As a further improved technical solution of the present application, the door has a pivoting end rotatably connected to the cabinet and a free end opposite to the pivoting end, the lines extending from the outlet end extend towards the free end, the shielding plate extends from the outlet end towards the free end; the guide groove extends from the end near the front wall of the door towards the rear wall and inclines towards the pivoting end.

As a further improved technical solution of the present application, the shielding plate comprises a first plate , end plates extending from the upper and lower ends of the first plate towards the direction of the front wall of the door, the end plates are in clearance fit with the receiving groove.

As a further improved technical solution of the present application, the refrigerator further comprises a hinge plate set on the cabinet, the hinge plate has a hinge pin rotatably connected with the door, the hinge pin has a wire hole penetrating along the up-down direction, and the remaining lines extend into the door through the wire hole.

As a further improved technical solution of the present application, the lines comprise a refrigerant inlet line, a refrigerant return line, a water line, a strong electric wire, and a weak electric wire; the refrigerant inlet line, refrigerant return line, and water line extend into the door through the wire hole, while the strong electric wire and weak electric wire extend into the door through the lead box.

The advantageous effects of the present application are: The refrigerator of the present application, by setting up a lead box fixed to the cabinet, ensures that the lines inside the lead box do not move or move only slightly during the opening and closing of the door, this can reduce the bending of the lines inside the lead box, while also reducing friction between the lines inside the lead box, lowering noise and improving the service life of the lines.

### BRIEF DESCRIPTION OF DRAWINGS

Figure 1 is a structural schematic diagram of a refrigerator of the present application with the door in a closed state;
Figure 2 is a structural schematic diagram of the refrigerator shown in Figure 1 with a cover plate and end hinge box disassembled;
Figure 3 is an enlarged view of area A in Figure 2;
Figure 4 is a structural schematic diagram showing the assembly of the middle hinge box, lead box, and shielding plate in Figure 1;
Figure 5 is an exploded view of Figure 4;
Figure 6 is a structural schematic diagram of the refrigerator in Figure 1 with the door in an open state (cover plate removed);
Figure 7 is an enlarged view of area B in Figure 6.

### DETAILED DESCRIPTION OF EMBODIMENTS

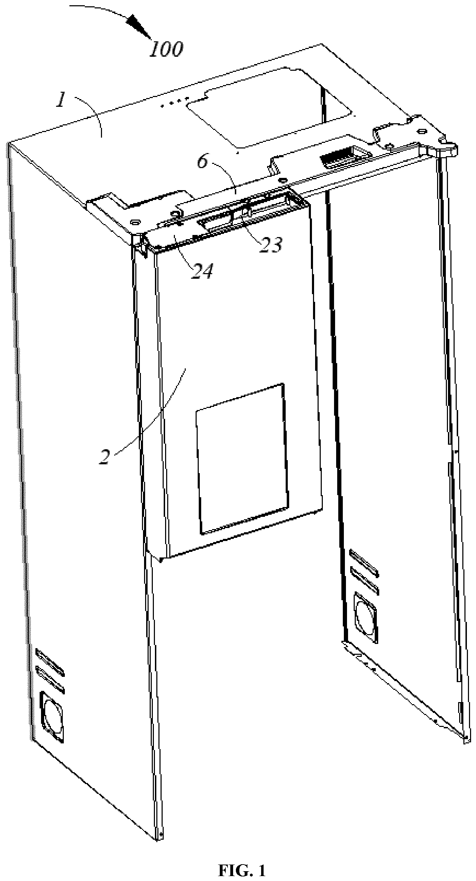

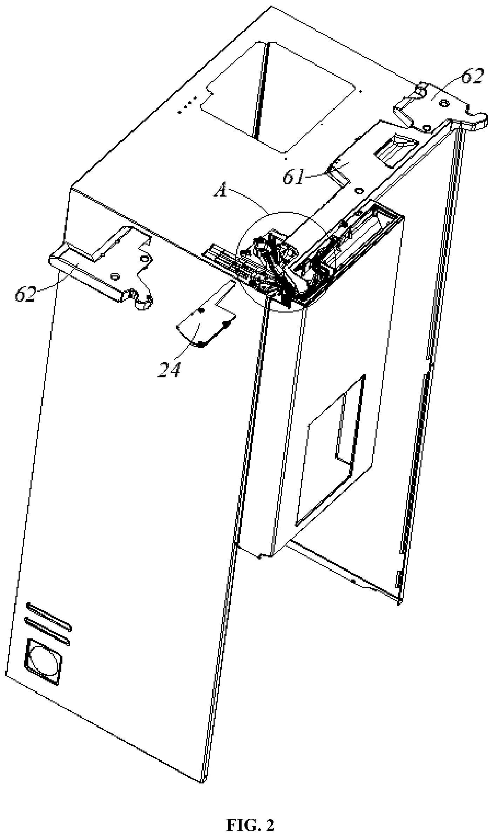

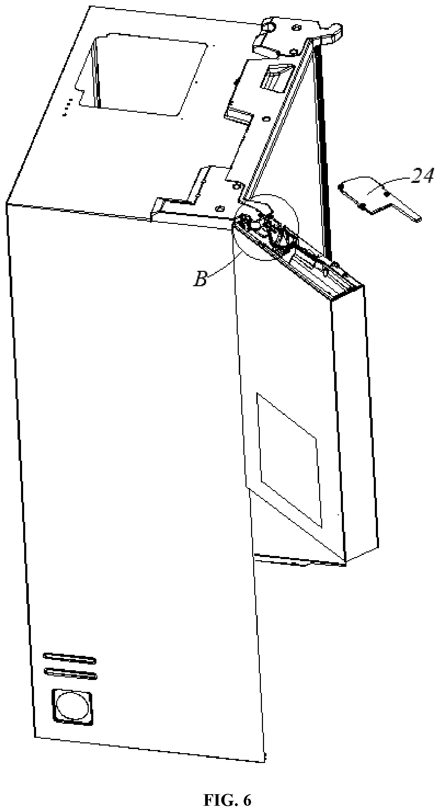

The following will describe the present application in detail in conjunction with the embodiments shown in the accompanying drawings. Please refer to Figures 1-7, which show a preferred embodiment of the present application. However, it should be noted that these embodiments are not limitations of the present application, and any functional, methodological, or structural equivalents or substitutions made by those skilled in the art based on these embodiments are within the scope of protection of the present application. In the accompanying drawings of this application, only the structural schematic diagram of the part of the refrigerator corresponding to one side of the door is shown.

The words expressing position and direction described in this application are all based on the normal use of the refrigerator, with the side of the refrigerator facing the user as the front, and the side away from the user as the back. In addition, it should be noted that, unless otherwise explicitly specified and defined, the term "connect" should be understood in a broad sense, for example, the connection can be a direct connection or an indirect connection through an intermediate medium, it can be a fixed connection, a movable connection, or a detachable connection, or an integral connection. For those skilled in the art, the specific meaning of the above terms in this utility model can be understood according to specific situations.

Please refer to Figures 1-7, the present application provides a refrigerator 100, including a cabinet 1, a door 2 rotatably connected to the front side of the cabinet 1, and lines 3 extending from the cabinet 1 into the door 2. The lines 3 are used to provide power and/or water and/or cooling to various functional modules on the door 2.

Specifically, the door 2 has a pivoting end rotatably connected to the cabinet 1 and a free end opposite to the pivoting end.

The refrigerator 100 also comprises a lead box 4 fixed to the cabinet 1 and protruding towards the door 2, with at least a portion of the lines 3 extending through the lead box 4 into the door 2. The lead box 4 is a fixed lead box 4. During the process of opening and closing the door 2, the lines 3 inside the lead box 4 will not move or will move only slightly, thereby reducing the bending of the lines 3 inside the lead box 4, while also reducing friction between the lines 3 inside the lead box 4, lowering noise and improving the service life of the lines 3, and enhancing safety performance.

Furthermore, the door 2 has a receiving groove 21 for accommodating the lines 3 passing through the lead box 4. The rear wall 22 of the door 2 has an opening 221 communicating with the receiving groove 21, and the outlet end of the lead box 4 protrudes into the receiving groove 21 through the opening 221. During the process of opening and closing the door 2, the outlet end always remains within the receiving groove 21, which can prevent the lines 3 from being exposed on the outside of the door 2, enhance the stability of the cooperation between the lead box 4 and the receiving groove 21, and improve the appearance of the door 2. At the same time, during the process of opening and closing the door 2, the lines 3 extending from the outlet end into the receiving groove 21 have a large degree of freedom of movement, which can avoid friction and bending, reduce noise, improve the service life of the lines 3, and enhance safety performance.

It is known that the width of the opening 221 is greater than the width of the lead box 4, so that during the process of opening and closing the door 2, there will be no interference between the lead box 4 and the door 2. At the same time, the height of the opening 221 is in clearance fit with the lead box 4 to reduce friction between the lead box 4 and the door 2, thereby reducing noise.

Specifically, the door 2 includes an upper trim strip 23, and the receiving groove 21 is formed by a downward recess in the upper trim strip 23, with the receiving groove 21 open towards the rear. The door 2 also includes a cover plate 24 for shielding the receiving groove 21 to prevent the lines 3 from being exposed upwards on the outside of the door 2. At the same time, the cover plate 24 and the rear end of the receiving groove 21 jointly form the opening 221.

It is known that in this embodiment, the rear wall 22 of the door 2 includes the rear wall 22 of the upper trim strip 23, and the rear wall 22 of the door 2 has the opening 221, which means that the rear wall 22 of the upper trim strip 23 has the opening 221. Of course, this is not limited to this arrangement.

Furthermore, the refrigerator 100 also comprises a shielding plate 5 movably arranged in the receiving groove 21. During the process of opening and closing the door 2, the shielding plate 5 is located between the lines 3 and the opening 221 to prevent the lines 3 from being exposed outwards through the gap between the lead box 4 and the opening 221, keeping the lines 3 always within the receiving groove 21. **In** other words, the shielding plate 5, the receiving groove 21, and the cover plate 24 jointly form a limiting space for the lines 3, keeping the lines 3 always within the receiving groove 21, preventing the lines 3 from being exposed, enhancing the appearance of the refrigerator 100, and improving safety performance.

**In** one specific embodiment, the shielding plate 5 is rotatably connected to the outlet end of the lead box 4, and the lines 3 extending from the outlet end extend towards the interior of the door 2 on the front side of the shielding plate 5. This can better achieve the blocking effect on the lines 3 and simplify the connection structure between the shielding plate 5 and the receiving groove 21. During the process of opening and closing the door 2, the shielding plate 5 is always located between the lines 3 and the opening 221 to prevent the lines 3 from being exposed outwards through the gap between the lead box 4 and the opening 221. Of course, this is not limited to this arrangement. **In** other embodiments, the shielding plate 5 can also be set to be movably connected to the upper trim strip 23.

Furthermore, the receiving groove 21 also has a guide groove 211, and the end of the shielding plate 5 away from the lead box 4 has a guide pin 51 slidably connected within the guide groove 211. That is, one end of the shielding plate 5 is rotatably connected to the outlet end, and the other end is slidably connected within the receiving groove 21. During the process of opening and closing the door 2, the cooperation between the guide groove 211 and the guide pin 51 can guide the movement of the shielding plate 5, reduce the swaying of the shielding plate 5 within the receiving groove 21, and enhance the blocking effect of the shielding plate 5 on the lines 3.

Furthermore, the end of the guide groove 211 near the rear wall 22 of the door 2 is close to the edge of the opening 221. When opening and closing the door 2 until the guide pin 51 is at the end of the guide groove 211 near the rear wall 22 of the door 2, the shielding plate 5 covers the gap between the lead box 4 and the opening 221 to prevent the exposure of the lines 3.

In one specific embodiment, the end of the guide groove 211 near the rear wall 22 of the door 2 is close to the edge of the opening 221 from the inner periphery of the opening 221. This can reduce the impact of the cooperation between the guide groove 211 and the guide pin 51 on the opening angle of the door 2, and can increase the opening angle of the door 2.

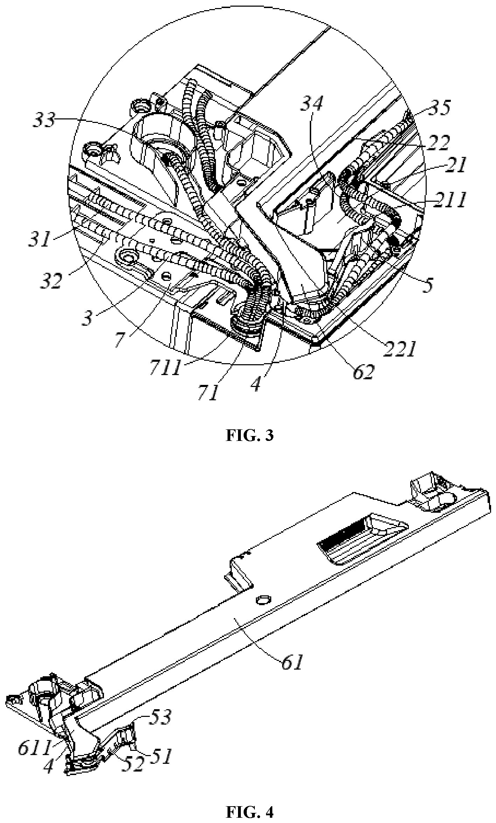

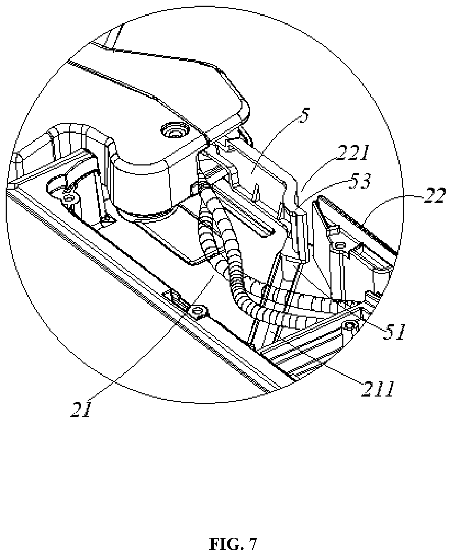

Furthermore, referring to Figures 4 and 7, the shielding plate 5 comprises a shielding plate body 52 rotatably connected to the outlet end and an anti-detachment portion 53 located at the end of the shielding plate body 52 away from the lead box 4. When the guide pin 51 is at the end of the guide groove 211 near the rear wall 22 of the door 2, the shielding plate body 52 covers the gap between the lead box 4 and the opening 221, at the same time, the anti-detachment portion 53 is located on the side of the rear wall 22 near the opening 221 facing towards the front wall of the door 2, that is, the anti-detachment portion 53 is on the front side of the rear wall 22 at the opening 221. This is to prevent the end of the shielding plate 5 away from the lead box 4 from disengaging backwards out of the opening 221 or being flush with the opening 221, which would cause interference between the end of the shielding plate 5 away from the lead box 4 and the periphery of the opening 221 during the process of opening and closing the door 2, affecting the opening and closing of the door 2, while also avoiding damage to the shielding plate 5.

In this embodiment, the lines 3 extending from the outlet end extend towards the free end, the shielding plate 5 extends from the outlet end towards the free end; the guide groove 211 extends from the end near the front wall of the door 2 towards the rear wall 22 and inclines towards the pivoting end. This is more conducive to the arrangement of the lines 3 and reduces interference between the lines 3 passing through the lead box 4 and other lines 3. Of course, this is not limited to this arrangement. The extension direction of the shielding plate 5 only needs to be set to be the same as the extension direction of the lines 3 within the receiving groove 21, and it should always be located between the lines 3 and the opening 221.

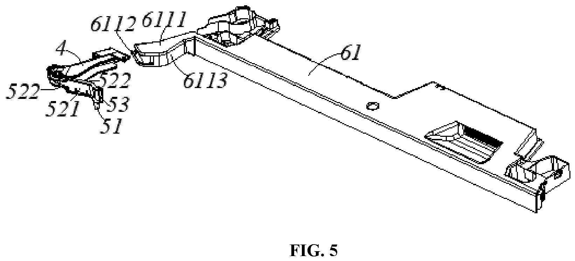

Furthermore, referring to Figure 5, the shielding plate 5 includes a first plate 521 , end plates 522 extending from the upper and lower ends of the first plate 521 towards the direction of the front wall of the door 2. The end plates 522 are in clearance fit with the receiving groove 21. That is, the lower end plate 522 is in clearance fit with the bottom of the receiving groove 21, and the upper end plate 522 is in clearance fit with the cover plate 24. On one hand, this can prevent the lines 3 from escaping through the gaps between the shielding plate 5 and the top or bottom of the receiving groove 21; on the other hand, it can reduce friction between the shielding plate 5 and the receiving groove 21 during the process of opening and closing the door 2, thereby reducing noise.

Specifically, the aforementioned first plate 521 and end plates 522 together form the shielding plate body 52. The specific structure of the anti-detachment portion 53 is not limited here.

Furthermore, the refrigerator 100 also comprises a hinge box 6 fixed to the cabinet 1, and the lead box 4 is fixed to the hinge box 6. By fixing the lead box 4 to the cabinet 1 through the hinge box 6 fixed on the cabinet 1, it can reduce the number of connection parts on the cabinet 1, simplifying the assembly of the refrigerator 100.

Furthermore, after the lead box 4 is fixed to the hinge box 6, the hinge box 6 completely covers the lead box 4, fully shielding the lead box 4 and enhancing the appearance of the refrigerator 100.

Specifically, the hinge box 6 includes a middle hinge box 61 and end hinge boxes 62 located at the end of the middle hinge box 61. The lead box 4 is fixed to the middle hinge box 61.

Furthermore, the middle hinge box 61 has a receiving part 611 protruding towards the door 2 and used to accommodate the lead box 4. The shape of the receiving part 611 is adapted to the shape of the lead box 4.

Specifically, the receiving part 611 includes an upper wall 6111 shielding the upper surface of the lead box 4, a lower wall 6112 located at the lower surface of the lead box 4, and a connecting wall 6113 connecting the upper wall 6111 and the lower wall 6112 on one side. After fixing the lead box 4 to the hinge box 6, the part of the lead box 4 protruding towards the door 2 is accommodated within the receiving part 611, and the lead box 4 is supported on the lower wall 6112.

Furthermore, the lead box 4 and the receiving part 611 jointly form a wire channel for the lines 3 to pass through. Specifically, the side of the lead box 4 corresponding to the connecting wall 6113 is open. The lines 3 can first be installed into the lead box 4 through the side facing the connecting wall 6113, and then the lead box 4 can be assembled with the middle hinge box 61, forming the wire channel that guides and limits the lines 3, facilitating the arrangement of the lines 3.

Furthermore, the refrigerator 100 also includes a hinge plate 7 fixed to the cabinet 1. The hinge plate 7 has a hinge pin 71 rotatably connected to the door 2. That is, the door 2 is rotatably connected to the hinge pin 71. The end hinge box 62 is used to shield the hinge plate 7.

The hinge pin 71 has a wire hole 711 penetrating along the up-down direction, and the remaining lines 3 extend into the door 2 through the wire hole 711. That is, in this application, part of the lines 3 extend into the door 2 through the hinge pin 71, and another part extend into the door 2 through the lead box 4, reducing the limitations of wiring through the hinge pin 71 in existing technology. This allows for flexible adjustment of the extension paths of various lines 3, avoiding line jams.

Specifically, referring to Figure 3, the lines 3 include a refrigerant inlet line 31, a refrigerant return line 32, a water line 33, a strong electric wire 34, and a weak electric wire 35. The refrigerant inlet line 31, refrigerant return line 32, and water line 33 extend into the door 2 through the wire hole 711, while the strong electric wire 34 and weak electric wire 35 extend into the door 2 through the lead box 4. On one hand, separating the water line 33 from the electrical wires can prevent the impact of water leakage from the water line 33 on the electrical wires; on the other hand, routing the strong electric wire 34 and weak electric wire 35 through the lead box 4 ensures that during the process of opening and closing the door 2, the strong electric wire 34 and weak electric wire 35 inside the lead box 4 will not move relative to each other or will only move slightly relative to each other. This can reduce the bending of the strong electric wire 34 and weak electric wire 35, while also reducing friction between the strong electric wire 34 and weak electric wire 35 inside the lead box 4, lowering noise and improving the service life of the strong electric wire 34 and weak electric wire 35, enhancing safety performance.

In summary, the refrigerator 100 of this application, by setting up a lead box 4 fixed to the cabinet 1, ensures that the lines 3 inside the lead box 4 do not move or move only slightly during the process of opening and closing the door 2. This can reduce the bending of the lines 3 inside the lead box 4, while also reducing friction between the lines 3 inside the lead box 4, lowering noise and improving the service life of the lines 3.

At the same time, setting up a shielding plate 5 in the receiving groove 21 that accommodates the lines 3 on the door 2 can prevent the lines 3 from being exposed, keeping the lines 3 always within the receiving groove 21, enhancing the appearance of the refrigerator 100 and improving safety performance.

It should be understood that although this specification describes the invention according to embodiments, not every embodiment contains only one independent technical solution. This manner of description in the specification is merely for clarity. Those skilled in the art should consider the specification as a whole, and the technical solutions in various embodiments can also be appropriately combined to form other embodiments that can be understood by those skilled in the art.

The series of detailed descriptions listed above are merely specific explanations of feasible embodiments of this invention, and are not used to limit the scope of protection of this invention. Any equivalent implementations or modifications made without departing from the technical spirit of this invention should be included within the scope of protection of this invention.

## Claims

1. A refrigerator, comprising a cabinet, a door rotatably connected to the front side of the cabinet, lines extending from the cabinet into the door, wherein the door has a receiving groove for accommodating the lines; **characterized in that**:
a rear wall of the door has an opening communicating with the receiving groove, the refrigerator further comprises a lead box fixed to the cabinet, an outlet end of the lead box protrudes into the receiving groove through the opening, and at least a portion of the lines extends through the lead box into the door.

2. The refrigerator according to claim 1, **characterized in that**:
the refrigerator further comprises a shielding plate movably arranged in the receiving groove, the shielding plate is located between the lines and the opening to keep the lines always within the receiving groove.

3. The refrigerator according to claim 2, **characterized in that**:
the shielding plate is rotatably connected to the outlet end of the lead box, and the lines extending from the outlet end extend towards the interior of the door on the front side of the shielding plate.

4. The refrigerator according to claim 3, **characterized in that**:
the receiving groove also has a guide groove, and an end of the shielding plate away from the lead box has a guide pin slidably connected within the guide groove.

5. The refrigerator according to claim 4, **characterized in that**:
an end of the guide groove near the rear wall of the door is close to the edge of the opening.

6. The refrigerator according to claim 4, **characterized in that**:
when the guide pin is at the end of the guide groove near the rear wall of the door, the shielding plate covers the gap between the lead box and the opening.

7. The refrigerator according to claim 6, **characterized in that**:
the end of the shielding plate away from the lead box has an anti-detachment portion, when the guide pin is at the end of the guide groove near the rear wall of the door, the anti-detachment portion is located on the side of the rear wall near the opening facing towards a front wall of the door.

8. The refrigerator according to claim 4, **characterized in that**:
the door has a pivoting end rotatably connected to the cabinet and a free end opposite to the pivoting end, the lines extending from the outlet end extend towards the free end, the shielding plate extends from the outlet end towards the free end; the guide groove extends from the end near a front wall of the door towards the rear wall and inclines towards the pivoting end.

9. The refrigerator according to claim 2, **characterized in that**:
the shielding plate comprises a first plate ,end plates extending from the upper and lower ends of the first plate towards the direction of a front wall of the door, the end plates are in clearance fit with the receiving groove.

10. The refrigerator according to claim 1, **characterized in that**:
the refrigerator further comprises a hinge plate set on the cabinet, the hinge plate has a hinge pin rotatably connected with the door, the hinge pin has a wire hole penetrating along the up-down direction, and the remaining lines extend into the door through the wire hole.

11. The refrigerator according to claim 10, **characterized in that**:
the lines comprise a refrigerant inlet line, a refrigerant return line, a water line, a strong electric wire, and a weak electric wire; the refrigerant inlet line, refrigerant return line, and water line extend into the door through the wire hole, while the strong electric wire and the weak electric wire extend into the door through the lead box.
